# EUROPÄISCHE PATENTSCHRIFT

(11) **EP 4 096 389 B1**
(45) Veröffentlichungstag und Bekanntmachung des Hinweises auf die Patenterteilung: **08.05.2024**
(21) Anmeldenummer: 21703189.7
(22) Anmeldetag: 29.01.2021
(51) Int. Cl.: A01G 9/24, F28D 20/02, F28D 17/00, F28D 19/00, F28D 19/04, F28D 20/00, F28D 21/00

(54) **KLIMAZELLE ZUR PFLANZENAUFZUCHT IN MEHREREN LAGEN MIT PLATZ- UND ENERGIESPARENDEM KLIMASYSTEM**
CLIMATE CELL FOR PLANT GROWING ON MULTIPLE SHELVES WITH SPACE- AND ENERGY-SAVING CLIMATE SYSTEM
CELLULE CLIMATIQUE POUR LA CULTURE VÉGÉTALE DANS PLUSIEURS ENDROITS AVEC UN SYSTÈME CLIMATIQUE ÉCONOMIQUE D'ESPACE ET D'ÉNERGIE

(30) Priorität: 31.01.2020 DE 102020102525; 04.05.2020 DE 202020102464 U
(43) Veröffentlichungstag der Anmeldung: 07.12.2022
(73) Patentinhaber: Kalera GmbH, 81379 München (DE); Viessmann Refrigeration Solutions GmbH, 35108 Allendorf (DE); Etanomics Service GmbH, 64546 Mörfelden-Walldorf (DE)
(72) Erfinder: KORZILIUS, Mark, 20097 Hamburg (DE); HÄSSLER-MARAUN, Markus, 35108 Allendorf (DE); MENZEL, Torsten, 35108 Allendorf (DE); MAUL, Andreas, 35108 Allendorf (DE); RÖSSEL, Timm, 35108 Allendorf (DE); WINTERS, Frank, 35108 Allendorf (DE); HECKER, Thomas, 64546 Mörfelden-Walldorf (DE)
(74) Vertreter: RGTH
(86) Internationale Anmeldenummer: PCT/EP2021/052220
(87) Internationale Veröffentlichungsnummer: WO 2021/152156

(56) Entgegenhaltungen:
- AU-A- 7 842 181
- DE-B3-102016 121 126
- FR-A1- 2 994 371
- FR-A1- 3 076 686
- JP-A- 2011 254 734

## Beschreibung

### Beschreibung

Die Erfindung betrifft eine abgeschlossene Klimazelle zur Pflanzenaufzucht in mehreren übereinander angeordneten Lagen, wobei die Klimazelle mindestens eine Kammer umfasst, in der die Lagen übereinander angeordnet sind und sich von einer ersten Seite der Kammer zu einer zweiten Seite der Kammer erstrecken, wobei jede Lage mindestens ein Pflanzenaufzuchtbehältnis und mindestens eine darüber angeordnete Beleuchtungsplattform aufweist. Mittels eines Klimasystems der Klimazelle wird ein Klima in der mindestens einen Kammer eingestellt.

Es ist bereits bekannt, dass Pflanzen in Gewächshäusern mit reguliertem Klima aufgezogen werden können. Dabei ist es üblich, künstliches Licht in den Abendstunden und Wintermonaten einzusetzen, um das Wachstum der Pflanze zu fördern. Zudem ist es bekannt, ein Gebläse oder ein Luftaustauschsystem in den Gewächshäusern installiert zu haben, welches für einen Luftaustausch beziehungsweise eine Zufuhr von Frischluft sorgt und über welches auch die Luftzusammensetzung wie Sauerstoffgehalt, CO2-Gehalt oder die Luftfeuchtigkeit reguliert werden können.

### Stand der Technik

In der DE 1 778 624 A wird eine Vorrichtung zum Konditionieren von Luft für eine Klimakammer beschrieben. Hierin wird mit einem Umwälzgebläse in einem im wesentlich geschlossenen Kreislauf Luft in einer Klimakammer verteilt und zirkuliert, wobei eine Konditionierungseinheit die Luft befeuchten, entfeuchten, kühlen und erwärmen kann. Hierbei wird die Luft jedoch zentral von der Konditionierungseinheit eingestellt und dann in der kompletten Klimakammer zirkuliert, bevor sie erneut zur Konditionierungseinheit zurückkommt.

In der DE 10 2016 121 126 B3 wird eine klimatisch abgeschlossene Klimazelle zur Aufzucht von Pflanzen in Innenräumen beschrieben, wobei mehrere Behältnisse in mindestens zwei Lagen innerhalb der Klimazelle übereinander angeordnet sind. Jedes Behältnis weist einen Aufnahmebereich mit einem flächig angeordneten Substrat zur Aufnahme der Pflanzen und/oder zur Aufnahme von Saatgut auf, wobei das Behältnis einen den Aufnahmebereich umfänglich umschließenden Rahmen aufweist.

### Darstellung der Erfindung: Aufgabe, Lösung, Vorteile

Aufgabe der vorliegenden Erfindung ist es, eine abgeschlossene Klimazelle zur Pflanzenaufzucht in mehreren übereinander angeordneten Lagen in Bezug auf die Klimatisierung im Inneren der Klimazelle derart zu verbessern, dass die Klimatisierung sehr platzsparend aufgebaut ist. Ein einfacher Aufbau des Klimasystems der Klimazelle hat nicht nur den Vorteil, dass die Montage weniger aufwendig ist, zudem ist es auch energiesparend, weniger Ventilatoren und eine einfachere Kühlung sowie Nacherhitzung mit Wärmerückgewinnung zu verwenden. Zusätzlich bietet das neue Baukonzept eine sehr homogene Temperaturverteilung und eine gleichmäßige Temperatur für alle Pflanzen, bei der diese nur um wenige Grad schwankt, auch wenn die Klimazelle eine große Größe erreicht. Das Baukonzept ist außerdem sehr flexibel, da Luft beiderseitig eingeblasen werden kann und somit für unterschiedliche Klimakammergrößen und Klimazellen adaptiert werden kann.

Erfindungsgemäß ist hierfür eine abgeschlossene Klimazelle zur Pflanzenaufzucht in mehreren Lagen vorgesehen, wobei die Klimazelle mindestens eine Kammer umfasst, in der die Lagen übereinander angeordnet sind und sich von einer ersten Seite der Kammer zu einer zweiten Seite der Kammer erstrecken, wobei jede Lage mindestens ein Pflanzenaufzuchtbehältnis und mindestens eine darüber angeordnete Beleuchtungsplattform aufweist. Mittels eines Klimasystems der Klimazelle wird ein Klima in mindestens einer Kammer eingestellt.

Dazu ist auf der ersten und der zweiten Seite der mindestens einen Kammer jeweils ein wärmespeicherndes Element angeordnet, wobei ein von einem Lüftungssystem des Klimasystems erzeugter Luftstrom beide wärmespeichernden Elemente durchströmt, wobei eine der beiden Seiten zumindest zu einem Zeitpunkt eine Lufteintrittsseite und die verbleibende Seite eine Luftaustrittsseite für den Luftstrom bildet, wobei das auf der Lufteintrittsseite der Kammer angeordnete wärmespeichernde Element zu diesem Zeitpunkt als wärmeabgebendes Element fungiert und das auf der Luftaustrittsseite angeordnete wärmespeichernde Element zu diesem Zeitpunkt als wärmeaufnehmendes Element fungiert.

Unter einer abgeschlossenen Klimazelle wird erfindungsgemäß eine sechsseitig geschlossene Klimazelle zur Aufzucht von Pflanzen im Innenraum verstanden. Mittels des Klimasystems wird das Klima im Inneren der abgeschlossenen Klimazelle den Bedürfnissen der Pflanzen, auch in Abhängig der jeweiligen Wachstumsphase, angepasst beziehungsweise entsprechend geregelt. Hierfür werden insbesondere die Temperatur, die Luftfeuchte, der Kohlendioxidgehalt, der Sauerstoffgehalt und die Strömungsgeschwindigkeit der Luft eingestellt. Ein Vorteil der abgeschlossenen Klimazelle ist dabei insbesondere, dass im Vergleich zu herkömmlichen Anbaumethoden weniger Wasser verbraucht wird, da im abgeschlossenen System nicht viel Feuchtigkeit entweicht und somit weniger Wasser für die Pflanzen zugegeben werden muss.

Die Pflanzenaufzuchtbehältnisse können wannenförmig ausgebildet sein und weisen einen oder mehrere Aufnahmebereiche für Pflanzen oder das Saatgut auf. Es können mehrere Pflanzenaufzuchtbehältnisse nebeneinander in einem wannenförmigen Träger angeordnet sein. Im Aufnahmebereich eines jeden Pflanzenaufzuchtbehältnisses ist ein Substrat angeordnet, auf welchem das Saatgut oder die Pflanze sitzt. Die entsprechende Nährstofflösung wird vorzugsweise unterhalb des Substrats entlanggeleitet.

Die Beleuchtungsplattform weist vorzugsweise im Wesentlichen dieselben äußeren Abmessungen wie das Pflanzenaufzuchtbehältnis oder der Träger mit mehreren nebeneinander angeordneten Pflanzenzuchtbehältnissen auf. Jede Beleuchtungsplattform kann mehrere Beleuchtungsmittel, insbesondere LEDs sowie auch optional Sensoren und/oder Kameras aufweisen. Bevorzugterweise können die Beleuchtungsmittel auch aus Hybridlicht bestehen, also aus Tageslicht und künstlich erzeugtem Licht gemischt sein. Das Tageslicht kann beispielsweise über Spiegel und Glasfasern in die abgeschlossene Klimakammer geleitet und dort verteilt werden. Sensoren können die Stärke und Zusammensetzung des Tageslichtes messen und die Beleuchtungsmittel dahingehend steuern, dass im Spektrum des Tageslichts fehlende Komponenten ergänzt werden, beispielsweise über LEDs. Mittels der Beleuchtungsmittel kann die Beleuchtung an die Bedingungen der Pflanze abhängig von der aktuellen Wachstumsphase eingestellt werden. Hierfür können die Beleuchtungsplattformen beziehungsweise die Beleuchtungsmittel der Beleuchtungsplattformen vorzugsweise automatisiert angesteuert werden. Mittels der optionalen Sensoren und/oder Kameras kann der Ist-Zustand des Klimas im Inneren der abgeschlossenen Klimazelle sowie auch die aktuelle Wachstumsphase der Pflanzen ermittelt werden. Auf Basis dieser Daten können dann die Beleuchtungsplattformen und/oder das Klimasystem beziehungsweise das Lüftungssystem oder zwischen den Kammern angebrachte Klimaregulierungselemente angesteuert werden.

Eine Kammer der Klimazelle besteht dabei aus mehreren übereinander angeordneten Lagen, welche an den gegenüberliegenden Seiten der Kammer befestigt sind. Jede Seite hat dabei einen eigenen Lufteintritt beziehungsweise Luftaustritt und kann bevorzugt auf voller Breite von Luft durchströmt werden. Dies bedeutet, dass Luft beziehungsweise der erzeugte Luftstrom durch eine erste Seite der Kammer in die Kammer eintritt, durch die Kammer hindurchströmt und auf einer zweiten Seite wieder aus der Kammer austritt. Die Kammern können auch übereinander angeordnet sein.

Sind mehrere Kammern nebeneinander angeordnet, so ist die erste Seite der zweiten Kammer benachbart zur zweiten Seite der ersten Kammer angeordnet, sodass die Luft, welche die erste Kammer verlässt, nach Durchströmen eines Zwischenraums zwischen den beiden Kammern in die zweite Kammer durch deren erste Seite eindringen kann. Der Zwischenraum ist dabei bevorzugt deutlich schmaler, als eine Kammer. Somit ist es möglich, viele Kammern nebeneinander in einer Klimazelle zu platzieren. Es ist zudem möglich, die Kammern hintereinander zu platzieren, sodass mehrere Reihen mit nebeneinander platzierten Kammern hintereinander angeordnet sind. Diese hintereinander platzierten Kammern weisen jedoch vorzugsweise keine gemeinsame Luftzirkulation auf, sondern sind bevorzugt mittels des Klimasystems oder eines weiteren Klimasystems klimatisch unabhängig eingestellt und/oder reguliert. Beispielsweise könnte jeder Reihe an Kammern jeweils ein Lüftungssystem zugeordnet sein, mittels welcher jeweils ein Luftstrom erzeugt wird, der alle nebeneinander angeordneten Kammern einer Reihe durchströmt.

In oder an der ersten beziehungsweise zweiten Seite der Kammer ist ein wärmespeicherndes Element angebracht, wobei das wärmespeichernde Element je nach Richtung des Luftstroms des Lüftungssystems ein wärmeabgebendes Element oder ein wärmeaufnehmendes Element sein kann beziehungsweise als wärmeabgebendes oder wärmeaufnehmendes Element fungiert. Im Sinne dieser Erfindung fungiert immer das wärmespeichernde Element zu einem Zeitpunkt als wärmeabgebendes Element, welches zu diesem Zeitpunkt auf der Lufteintrittsseite einer Kammer angeordnet ist. Das wärmespeichernde Element, welches zu diesem Zeitpunkt auf der Luftaustrittsseite derselben Kammer angeordnet ist, fungiert zu diesem Zeitpunkt als wärmeaufnehmendes Element. Somit können die wärmespeichernden Elemente ihre Funktion zwischen wärmeaufnehmend und wärmeabgebend wechseln. Dies kann zum Beispiel durch eine Luftstromumkehr geschehen.

Gemäß dieser Erfindung hat ein wärmespeicherndes Element eine wärmeabgebende Funktion, wenn es gespeicherte Wärme an den Luftstrom abgibt, welcher dieses wärmespeichernde Element durchströmt. Umgekehrt hat ein wärmespeicherndes Element eine wärmeaufnehmende Funktion, wenn es aus dem Luftstrom, welcher dieses wärmespeichernde Element durchströmt, Wärme aufnimmt und somit den Luftstrom abkühlt.

Bei nebeneinander angeordneten Kammern ist das wärmeaufnehmende Element der im Luftstrom zuerst liegenden Kammer neben dem wärmeabgebenden Element der im Luftstrom als zweites liegenden Kammer angeordnet, wobei beide Elemente beziehungsweise die Kammern durch einen Zwischenraum getrennt sind. In diesem Zwischenraum können noch weitere Elemente des Klimasystems platziert werden beziehungsweise platziert sein, beispielsweise ein Klimaregulierungselement. Ein solches Klimaregulierungselement kann beispielsweise bevorzugt zur Luftkühlung und/oder zur Feuchtigkeitsregulierung eingesetzt werden.

Das Lüftungssystem umfasst ein luftbewegendes Element und/oder ein den Luftstrom erzeugendes Element. Beispielsweise kann hierfür ein Ventilator vorgesehen sein, welcher auf einer oder beiden Seiten der Klimazelle in einem Randraum angebracht sein kann. Es können auch an beiden Enden einer Reihe von nebeneinander angeordneten Kammern Randräume angebracht sein, welche bevorzugt beide mit einem Lüftungssystem ausgestattet sind. Die Randräume bilden also gewissermaßen den Anfang und den Abschluss einer Reihe aus nebeneinander angeordneten Kammern und sind anstatt eines Zwischenraums im Anschluss an die erste Seite der ersten Kammer und zweite Seite der letzten Kammer angeordnet. Durch das Lüftungssystem wird die Richtung des Luftstroms in der Klimazelle beziehungsweise den Kammern bestimmt.

Vorzugsweise besteht die mindestens eine Kammer der abgeschlossenen Klimazelle aus mindestens einer oberen und mindestens einer unteren Ebene. Die Ebenen sind dabei bevorzugt baulich getrennt, sodass kein nennenswerter Luftaustausch zwischen den Ebenen möglich ist. Im Idealfall ist die bauliche Trennung der Art, dass die einzelnen Kammern inklusive der dazwischenliegenden Zwischenräume getrennt sind, sodass ein Luftstrom, der in der oberen Ebene verläuft, und ein Luftstrom, der in der unteren Ebene verläuft, unabhängig voneinander strömen können. Besonders bevorzugt sind der Luftstrom der oberen Ebene und der Luftstrom der unteren Ebene in jeweils entgegengesetzter Richtung ausgerichtet. Sollten mehr als zwei Ebenen in der Kammer vorliegen, so ist es möglich, dass die Richtung des Luftstroms immer abwechselnd zwischen zwei Ebenen in entgegengesetzter Richtung ausgerichtet ist, sodass entweder jeweils zwei Ebenen in einer Art ringförmigen Zirkulation durchströmt werden oder alle Ebenen serpentinenartig in wechselnden Richtungen von der Luft durchströmt werden. Es ist bei mehreren Ebenen auch möglich, dass einige Ebenen in der gleichen Richtung vom Luftstrom durchströmt werden, sodass nicht zwischen allen Ebenen ein Richtungswechsel des Luftstroms stattfindet. Besonders bevorzugt besteht jede Ebene aus ähnlich vielen Lagen, sodass die Abstände zwischen den Ebenen ungefähr äquidistant sind.

Vorzugsweise ist die Richtung des Luftstroms, der durch die mindestens eine Kammer strömt, änderbar und/oder wechselbar. Dies bedeutet, dass der Luftstrom auf einer Ebene wechselweise in eine erste Richtung und in eine entgegengesetzte zweite Richtung strömen kann. Als Richtungswechsel der Strömung kann dabei jeder Wechsel der Richtung gemeint sein, insbesondere aber ein Strömen in die entgegengesetzte Richtung der zu vorigen Strömungsrichtung auf der gleichen Ebene. Bevorzugterweise strömt der Luftstrom 10 Sekunden bis 3 Minuten in eine Richtung, bevor die Richtung geändert wird. Besonders bevorzugt strömt der Luftstrom 60 Sekunden bis 2 Minuten in eine Richtung, ganz besonders bevorzugt 90 Sekunden bis 100 Sekunden, bevor ein Richtungswechsel stattfindet. Findet ein Richtungswechsel statt, strömt der Luftstrom bevorzugterweise genauso so lange, wie er in die eine Richtung geströmt ist, auch in die andere Richtung, sodass die Richtungswechsel in gleichmäßigen Perioden ablaufen. Bevorzugterweise wird bei einem Richtungswechsel der Luftstrom kurzzeitig pausiert, das heißt, der Luftstrom kommt kurzzeitig, insbesondere weniger als 20 Sekunden, bevorzugt weniger als 10 Sekunden zum Erliegen. Dabei kann der Luftstrom dadurch zum Erliegen kommen, dass Lüftungssysteme auf beiden Seiten nicht angeschaltet sind. Der Luftstrom kann jedoch auch dadurch ausgebremst oder zum Erliegen gebracht werden, dass ein Lüftungssystem in einen Randbereich auf der einen Seite der Klimazelle ausgeschaltet wird, und im Randraum der entgegengesetzten Seite der Klimazelle angeschaltet wird, damit ein möglichst schneller Richtungswechsel realisiert werden kann.

Ferner ist bevorzugterweise vorgesehen, dass die abgeschlossene Klimazelle ein Lüftungssystem aufweist, durch welches die Richtung des Luftstroms änderbar und/oder wechselbar ist. Das Lüftungssystem umfasst bevorzugt einen Ventilator, alternativ oder zusätzlich kann das Lüftungssystem ein Gebläse oder einen Kompressor umfassen. Wichtig ist, dass das Lüftungssystem in der Lage ist, die Richtung eines Luftstroms zu steuern.

Ferner ist bevorzugterweise vorgesehen, dass die wärmespeichernden Elemente starr an der ersten beziehungsweise der zweiten Seite der Kammer angeordnet sind. Eine starre Anordnung bedeutet hier, dass die Elemente fest, also unbeweglich mit der ersten beziehungsweise zweiten Seite der Kammer verbunden sind. Die wärmespeichernden Elemente können ein- und ausbaubar sein, aber nicht beweglich gegenüber der jeweiligen Seite der Kammer. Die wärmespeichernden Elemente stellen dabei den Lufteintritt und Luftaustritt der Kammer da, verschließen diese also baulich, sind jedoch selbst luftdurchlässig, beispielsweise durch Löcher oder Durchlässe. Beispielsweise können die wärmespeichernden Elemente am Befestigungsgerüst der Lagen montiert werden. Besonders bevorzugt wird nach einem Richtungswechsel des Luftstroms die Funktion der beiden wärmespeichernden Elemente getauscht, und zwar derart, dass das vorher als wärmeabgebend fungierende Element als wärmeaufnehmendes Element fungiert, und das vorher als wärmeaufnehmend fungierende Element als wärmeabgebendes Element fungiert. Dies hat den Vorteil, dass sich wärmeaufnehmendes und wärmeabgebendes Element wechselseitig tauschen, das zuerst wärmeaufnehmende Element entzieht dabei der durchströmenden Luft Wärme, die es dann, wenn es als wärmeabgebendes Element fungiert, wieder an die nun in der Gegenrichtung durchströmende Luft abgeben kann. Durch die Wärmespeicherung im wärmespeichernden Element kann daher Energie übertragen und somit eingespart werden, da ausgenutzt wird, dass die Luft am Lufteintritt und am Luftaustritt der Kammer unterschiedliche Temperaturen hat und durch die Umkehrung von Lufteintritt und Luftaustritt und die zwischenzeitliche Speicherung der von der Luft am Luftaustritt abgegebenen Energie in einem der wärmespeichernden Elemente diese beim Lufteintritt nach der Umkehr wiederverwertet werden kann.

Vorzugsweise kann alternativ zu einem Richtungswechsel der Luft in der abgeschlossenen Klimazelle das zu einem Zeitpunkt als wärmeabgebend fungierende Element der oberen Ebene der mindestens einen Kammer mit dem zu diesem Zeitpunkt als wärmeaufnehmendes fungierendes Element der unteren Ebene der mindestens einen Kammer derart verbunden sein, dass die beiden Element bewegbar durcheinander austauschbar sind. Unter bewegbar kann dabei ein Drehen, Schwenken und/oder Rotieren oder eine andere Bewegung der beiden Elemente miteinander oder relativ zu einander verstanden werden. Die wärmespeichernden Elemente der mindestens zwei Ebenen sind über die Ebenen hinweg vorzugsweise paarweise verbunden, sodass Elemente der gleichen Seite der Kammer mit unterschiedlichen Funktionen, also wärmeabgebend oder wärmeaufnehmend, miteinander verbunden sind. Das heißt, dass das wärmeabgebende Element des Lufteintritts der oberen Ebene mit dem wärmeaufnehmenden Element des Luftaustritts der unteren Ebene verbunden ist und das wärmeaufnehmende Element des Luftaustritts der oberen Ebene mit dem wärmeabgebenden Element des Lufteintritts der unteren Ebene verbunden ist. Insbesondere ist bevorzugt, dass die beiden Elemente der ersten und der zweiten Seite jeweils drehbar, schwenkbar, rotierbar oder anderweitig umeinander bewegbar sind, sodass diese ihre Position gut tauschen können. Dabei können die Elemente auch leicht zueinander versetzt eingebaut sein, sodass durch das nach oben beziehungsweise nach unten Bewegen der Elemente ein Tauschen stattfindet.

Alternativ können die beiden Elemente zwei Hälften eines rotationssymmetrischen Körpers sein, sodass die beiden verbundenen wärmespeichernden Elemente zwei Teile eines Rotors bilden. Dabei ändert sich durch die Rotation, welcher Teil des Körpers wärmeaufnehmend und welcher wärmeabgebend ist, nicht jedoch die Position des wärmeabgebenden Elementes, welches immer am Luftaustritt angeordnet ist, beziehungsweise des wärmeaufnehmenden Elementes, welches immer am Lufteintritt angeordnet ist. Besonders bevorzugt ist daher, dass bei der Rotation der wärmespeichernden Elemente zweier Ebenen das als wärmeaufnehmend fungierende Element der ersten Ebene zu einem als wärmeabgebend fungierenden Element der zweiten Ebene gewechselt wird und das als wärmeabgebend fungierende Element der ersten Ebene zu einem als wärmeaufnehmend fungierenden Element der zweiten Ebene gewechselt wird.

Vorzugsweise findet die Bewegung der beiden verbundenen, wärmespeichernden Elemente kontinuierlich statt. Dies führt zu einer konstanten Änderung der beiden wärmespeichernden Elemente und einem stetigen Wechsel zwischen wärmeaufnehmendem und wärmeabgebendem Element. Das hat den Vorteil, dass die Temperatur des Körpers im jeweiligen Bereich des Luftein- und Luftaustritts sehr konstant ist. Genauer gesagt zeigt der Temperaturverlauf des sich kontinuierlich bewegenden wärmespeichernden Elementes im Lufteintrittsbereich einer ersten Ebene in Rotationsrichtung direkt nach dem Luftaustrittsbereich einer zweiten Ebene kommend die wärmste Elementtemperatur, wobei der andere Bereich des Lufteintrittsbereichs der ersten Ebene, welche in Rotationsrichtung vor dem Luftaustrittsbereich der zweiten Ebene liegt, im Vergleich dazu etwas kälter ist. Beim Luftaustrittsbereich stellt sich der Temperaturgradient genau umgekehrt dar, der dem Lufteintritt einer zweiten Ebene nachfolgende Bereich ist kälter als der Bereich des Luftaustrittsbereichs einer ersten Ebene, welcher in Rotationsrichtung vor dem Lufteintrittsbereich einer zweiten Ebene liegt.

Alternativ zu einer kontinuierlichen Bewegung kann bevorzugterweise die Bewegung der beiden verbundenen, wärmespeichernden Elemente in diskreten Schritten stattfinden. Hierbei kann die Bewegung der wärmespeichernden Elemente in regelmäßigen Zeitintervallen, beispielsweise maximal 1 Minute, bevorzugt weniger als 30 Sekunden, besonders bevorzugt weniger als 10 Sekunden in gleichmäßigen periodischen Abständen erfolgen. Es ist beispielsweise möglich, dass dabei immer eine Rotation um 30°, 60°, 120° oder 180° ausgeführt wird. Je nach Form der wärmespeichernden Elemente kann es auch sein, dass nur eine Rotation um exakt 180° möglich ist, falls der Körper nicht rotationssymmetrisch ist. Hierbei kann jedoch bei einem horizontal versetzten Einbau der beiden wärmespeichernden Elemente auch eine Auf- beziehungsweise eine Abwärtsbewegung der Elemente zu einem Tausch der Plätze führen. Liegt eine Rotation der Elemente vor, also ist die Bewegung eine Rotation, so gibt es wieder einen Temperaturgradienten innerhalb der wärmespeichernden Elemente, sodass der Lufteintrittsbereich einer ersten Ebene, welcher in Rotationsrichtung direkt nach dem Luftaustrittsbereich einer zweiten Ebene kommt, eine wärmere Elementtemperatur hat als der Bereich des Eintrittsbereichs, welcher in Rotationsrichtung vor dem Luftaustrittsbereich der zweiten Ebene kommt. Umgekehrt hat der Bereich des Luftaustrittsbereichs einer ersten Ebene, der in Rotationsrichtung direkt nach dem Lufteintrittsbereich einer zweiten Ebene kommt, eine kältere Temperatur als der Bereich des Luftaustrittsbereichs der ersten Ebene, welcher direkt vor dem Lufteintrittsbereich der zweiten Ebene in Rotationsrichtung angeordnet ist.

Bevorzugterweise umfasst die abgeschlossene Klimazelle mehrere Kammern, welche bevorzugt nebeneinander angeordnet sind, sodass der Luftstrom die Kammern hintereinander durchströmt. Das bedeutet, dass der Luftstrom, wenn er eine Seite der ersten Kammer verlässt, durch einen kurzen Zwischenraum zwischen den Kammern strömt, um danach die der ersten Kammer zugewandte Seite der zweiten Kammer zu durchströmen. Während der Luftstrom zirkuliert, werden alle Kammern gleichzeitig durchströmt. Dadurch können mehrere Kammern und falls vorhanden die Zwischenräume zwischen den Kammern von einem Luftstrom hintereinander in der gleichen Richtung durchströmt werden.

Besonders bevorzugt ist in einem Zwischenraum zwischen zwei benachbarten Kammern der abgeschlossenen Klimazelle und/oder auf einer Seite einer einzelnen Kammer ein Klimaregulierungselement angebracht. Das Klimaregulierungselement kann dabei beispielsweise ein Element zur Luftkühlung oder zur Feuchtigkeitsregulierung sein. Die Luftkühlung kann dabei beispielsweise durch das Hineinströmen kalter Luft oder durch das Einbringen anderer kalter Substanzen, beispielsweise kalter Wassertropfen geschehen. Die Feuchtigkeitsregulierung kann dabei sowohl eine Feuchtigkeitsreduktion als auch ein Feuchtigkeitszuwachs sein, wobei eine Feuchtigkeitsreduktion mit Luftentfeuchtern beispielsweise über sorptive Materialien, oder durch Kondensation an kalten Wassertropfen oder kalten Oberflächen geschehen kann. Sollte die Luft durch kühles Wasser gekühlt werden, können wie beim "Luftwaschen" auch eventuelle Schadstoffe und Verunreinigungen aus der Luft gelöst werden. Das Klimaregulierungselement in den Zwischenräumen der Kammern bietet den Vorteil, dass die Luft nach jeder Kammer reguliert werden kann und damit zu Beginn jeder Kammer kontrollierte Klimabedingungen vorherrschen. Vorzugsweise können in den Zwischenräumen auch Messgeräte installiert sein, welche die Luft kontrollieren, damit ein Nachregeln der Luftbedingungen möglich ist. Es ist auch möglich, die Kammern auf unterschiedliche Klimabedingungen einzustellen, beispielsweise wenn sich Pflanzen in unterschiedlichen Wachstumsstadien in den Kammern befinden und andere Temperaturen oder Luftfeuchtigkeiten ideal sind.

Ferner ist bevorzugterweise vorgesehen, dass das wärmespeichernde Element wärmeleitendes Material, insbesondere Metall, bevorzugterweise Aluminium, aufweist oder daraus besteht. Dabei sind verschiedene wärmeleitende Materialien möglich, wichtig ist hauptsächlich die Wärmespeicherfähigkeit des wärmeleitenden Materials.

Des Weiteren weist das wärmespeichernde Element mehrere länglich ausgebildete Durchlässe auf und besteht bevorzugterweise aus einer Wabenstruktur beziehungsweise weist eine solche auf. Länglich ausgebildete Durchlässe heißt in diesem Fall, dass der Durchmesser des Durchlasses kleiner ist als die Länge des Durchlasses, insbesondere ist die Länge mindestens doppelt so lang wie der Durchmesser, besonders bevorzugt ist die Länge mindestens fünfmal so lang wie der Durchmesser, ganz besonders bevorzugt entspricht die Länge dem zehnfachen Durchmesser des Durchlasses. Es ist ebenfalls möglich, dass das wärmespeichernde Element über eine Lamellenstruktur verfügt oder aus einer Spirale aufgebaut wird, wobei zwischen den Kreisen beziehungsweise Spiralarmen kleinere Strukturen wie Stege oder Wellen angebracht sind. Die Wellen können dabei auch zwischen den Spiralarmen angeordnet sein, sodass die Maxima und Minima jeweils benachbarte Spiralarme berühren.

Beispielhaft für eine Klimaregulierung einer Kammer mit zugehörigem Zwischenraum sei hier die Temperaturänderung beziehungsweise die Feuchtigkeitsänderung der Luft des Lüftungssystems beschrieben: Bevorzugterweise wird eine Temperatur der Luft des Lüftungssystems beim Lufteintritt in die Kammer durch ein wärmeabgebendes Element erhöht und wird nach dem Lufteintritt in der Kammer bis zum Luftaustritt aus dieser ansteigen, um danach am Luftaustritt aus der Kammer durch das wärmeaufnehmende Element und eventuell nach der Kammer in einem Zwischenraum durch ein Klimaregulierungselement abgesenkt zu werden.

Beispielsweise kann die Temperatur am Lufteintritt in die Kammer von 20°C auf 22°C aufgewärmt werden, wenn sie das wärmeabgebende Element passiert. In der Kammer kann die Temperatur beispielsweise von 22°C auf 25°C ansteigen, wobei dieser Anstieg hauptsächlich auf Abwärme der Beleuchtungsanlage zurückzuführen sein kann. Am Luftaustritt der Kammer wird durch das wärmeaufnehmende Element die Luft beispielsweise von 25°C auf 23°C abgekühlt, wobei sie im Zwischenraum zwischen zwei Kammern weiter von 23°C auf 20°C abgekühlt werden kann, insbesondere durch ein Klimaregulierungselement. Im Zwischenraum kann die Luftfeuchtigkeit zudem von 85% auf 65% gesenkt werden, da sich während des Durchströmens durch die Kammer die Luftfeuchtigkeit erhöht. Idealerweise ist das Klimaregulierungselement im Zwischenraum zwischen den Kammern sowohl ein luftkühlendes Element sowie auch für die Einstellung der Luftfeuchtigkeit zuständig. Das Klimaregulierungselement kann besonders bevorzugt auch die CO2- und/oder die Sauerstoffkonzentration der Luft regulieren.

### Beschreibung der Figuren

Die Erfindung wird im Folgenden anhand bevorzugter Ausführungsformen beispielhaft erläutert.

Es zeigen schematisch:
- Figur 1:: eine klimatisch abgeschlossene Klimazelle mit mehreren Kammern,
- Figur 2a, b:: ein wärmespeicherndes Element in einer Seiten- und Vorderansicht,
- Figur 3a, b:: den Luftstrom eines Klimasystems zu zwei verschiedenen Zeitpunkten und
- Figur 4a, b:: die Rotation eines wärmespeichernden Elements während des Betriebs der abgeschlossenen Klimazelle.

### Bevorzugte Ausführungsformen der Erfindung

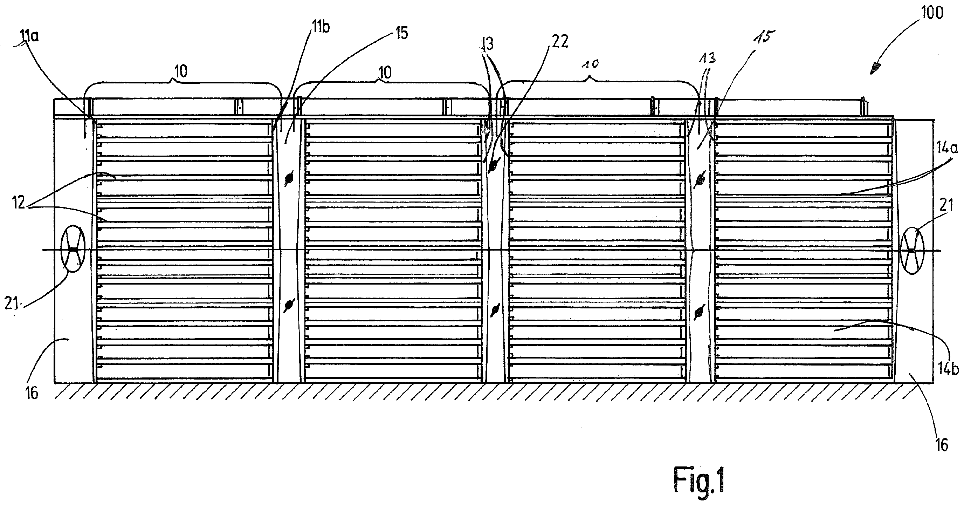

Figur 1 zeigt eine abgeschlossene Klimazelle 100 zur Pflanzenaufzucht, welche beispielhaft aus vier Kammern 10 besteht. Die Kammern 10 sind nebeneinander angeordnet, und durch einen kleinen Zwischenraum 15 voneinander getrennt. Kammern 10 und Zwischenräume 15 liegen jedoch vollständig innerhalb der abgeschlossenen Klimazelle 100.

Die Kammern 10 umfassen jeweils mehrere Lagen 12, die ein oder mehrere Pflanzenaufzuchtsbehältnissen und ein oder mehrere darüber angeordnete Beleuchtungsplattformen umfassen. Die Lagen 12 erstrecken sich von einer ersten Seite 11a der Kammer 10 zu einer zweiten Seite 11b der Kammer 10 und sind über die komplette Höhe der Kammer 10 angebracht.

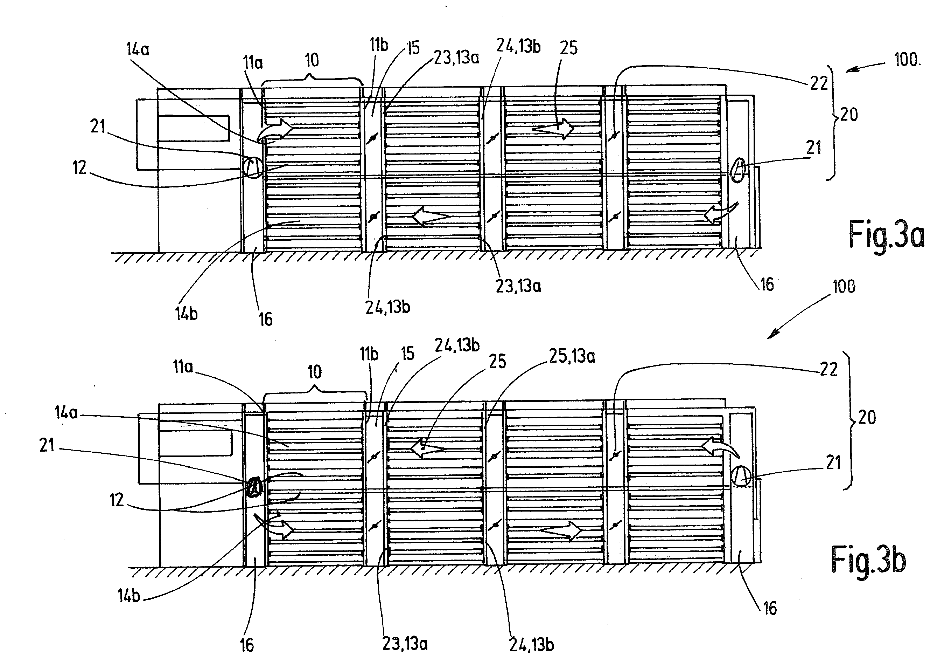

An der ersten Seite 11a und der zweiten Seite 11b der Kammer 10 sind jeweils ein oder mehrere wärmespeichernde Elemente 13 angeordnet, durch welche ein von einem Lüftungssystem 21 eines Klimasystems 20 erzeugter Luftstrom 25 (siehe Figur 3) strömen kann beziehungsweise strömt. Zwischen den wärmespeichernden Elementen 13 beziehungsweise Seiten 11a, 11b nebeneinander liegender Kammern 10 ist im Zwischenraum 15 ein Klimaregulierungselement 22 angeordnet.

Die Luft wird durch ein Lüftungssystem 21, welches in einem Randraum 16, der die abgeschlossene Klimazelle 100 auf beiden Seiten abschließt, angebracht ist, durch die Kammern 10 geleitet. Die Kammern 10 umfassen eine erste Ebene 14a, welche im oberen Bereich der Kammern 10 angeordnet ist, und eine davon baulich getrennte zweite Ebene 14b, welche den unteren Bereich der Kammern 10 bildet. Auch die Zwischenräume 15 sind derart in zwei Ebenen 14a, 14b getrennt. Die in der Klimazelle 100 zirkulierte Luft strömt dabei innerhalb einer Ebene 14a, 14b immer in die gleiche Richtung, kann in den beiden unterschiedlichen Ebenen 14a, 14b jedoch bevorzugt in zueinander unterschiedliche Richtungen strömen. Die Ebenen 14a, 14b sind daher so gesplittet, dass ein Luftstrom 25 die bauliche Trennung nicht überwinden kann.

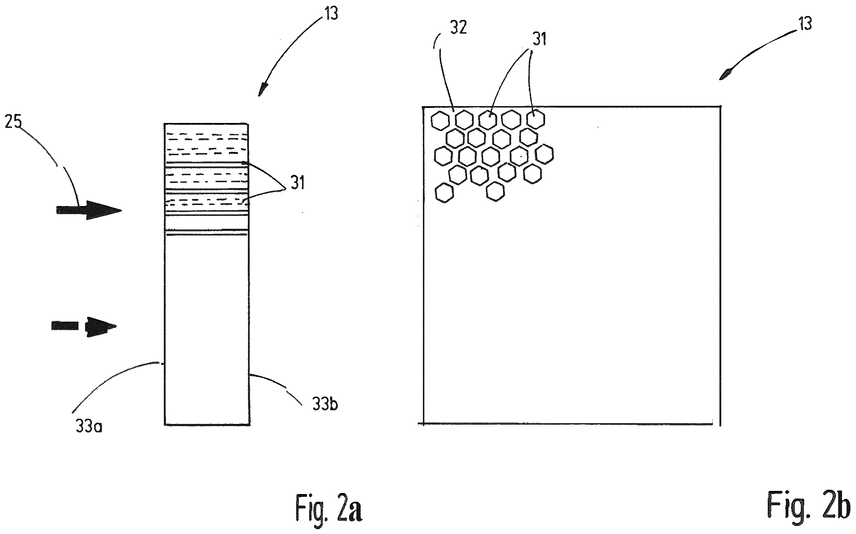

Figur 2a zeigt eine Seitenansicht eines wärmespeichernden Elementes 13, durch welches von links nach rechts ein Luftstrom 25 strömt. Der Luftstrom 25 strömt dabei durch Durchlässe 31 im wärmespeichernden Element 13, welche sich vollständig von der Vorderseite 33a auf die Rückseite 33b erstrecken. Die Oberflächenstruktur des wärmespeichernden Elementes 13 ist dadurch auf der Vorderseite 33a identisch zur Rückseite 33b. Zwischen den Durchlässen 31 befindet sich wärmeleitendes Material 32, welches das wärmespeichernde Element 13 aufweist oder woraus das wärmespeichernde Element 13 besteht. Figur 2a zeigt gradlinig durch das wärmespeichernde Element 13 verlaufende Durchlässe 31, diese können jedoch in einer anderen Ausführungsform auch gekrümmt oder gebogen verlaufen.

Figur 2b zeigt eine Vorderansicht eines wärmespeichernden Elementes 13, welches den Einlass der Durchlässe 31 zeigt. Zwischen den Durchlässen 31 sind Stege aus wärmeleitendem Material 32 gezeigt. Gut zu erkennen ist die Wabenstruktur der Durchlässe 31 des wärmespeichernden Elementes 13. Der Durchmesser der Durchlässe 31 ist dabei deutlich kleiner als die Länge der Durchlässe 31, sodass sich eine langgezogene Struktur mit dünnen Durchlässen 31 ergibt, wie es auch in Figur 2a erkennbar ist. Das wärmeleitende Material 32 ist auch wärmespeichernd. Die äußere Form des wärmespeichernden Elementes 13 kann dabei quadratisch beziehungsweise rechteckig oder rund sein, das wärmespeichernde Element 13 kann aber auch eine andersartige Form aufweisen.

In Figur 3a wird eine abgeschlossene Klimazelle 100 gezeigt, welche beispielhaft aus vier Kammern 10 besteht, die durch einen Zwischenraum 15 voneinander getrennt sind. Die abgeschlossene Klimazelle 100 ist dabei in zwei Ebenen 14a, 14b aufgeteilt, wobei sowohl die Kammern 10 als auch die Zwischenräume 15 durch eine bauliche Trennung in diese zwei Ebenen 14a, 14b geteilt sind. Die erste Ebene 14a ist dabei die obere Ebene und die zweite Ebene 14b ist die untere Ebene. Die Teilung in zwei Ebenen 14a, 14b erstreckt sich nicht durch die Randräume 16, welche vor der ersten Kammer 10 und nach der letzten Kammer 10 angeordnet sind und die Klimazelle 100 somit in horizontaler Richtung abschließen.

In den Randräumen 16 ist jeweils ein Lüftungssystem 21 angebracht, beispielsweise ein Ventilator. Die Kammern 10 werden von einer ersten Seite 11a und einer zweiten Seite 11b begrenzt, wobei zwischen den Seiten 11a, 11b innerhalb der Kammern 10 Lagen 12 angeordnet sind, welche vertikal übereinander liegen und horizontal verlaufen. Jede Lage 12 besteht dabei aus ein oder mehreren Pflanzenaufzuchtbehältnissen und ein oder mehreren darüber angeordneten Beleuchtungsplattformen.

In jeder der Ebenen 14a, 14b ist auf der ersten Seite 11a und der zweiten Seite 11b einer Kammer 10 jeweils ein wärmespeicherndes Element 13 angebracht, durch das Luft beziehungsweise der Luftstrom 25 in die Kammer 10 hinein und aus der Kammer 10 herausströmen kann. Die Kammern 10 und die Zwischenräume 15 der ersten Ebene 14a und der zweiten Ebene 14b sind somit jeweils derart verbunden, dass ein Luftstrom 25 eine Ebene 14a, 14b ungehindert durchströmen kann.

In Figur 3a sieht man einen Luftstrom 25 im Uhrzeigersinn durch die erste Ebene 14a, welche die obere Ebene ist, und die zweite Ebene 14b, welche die untere Ebene ist, strömen, welcher durch den Betrieb des Lüftungssystems 21 auf der linken Seite im Randraum 16 aufrechterhalten beziehungsweise erzeugt wird. Der Luftstrom 25 strömt dabei nach dem Randraum 16 zuerst durch das wärmespeichernde Element 13 der ersten Seite 11a einer Kammer 10, welches den Lufteintritt 23 in die Kammer realisiert und als wärmeabgebendes Element 13a fungiert. Somit gibt dieses wärmespeichernde Element 13 beim Eintritt des Luftstroms 25 in die Kammer 10 gespeicherte Wärme an den Luftstrom 25 ab. Innerhalb der Kammer wird der Luftstrom 25 zum Beispiel durch die Beleuchtung weiter erwärmt. Am Luftaustritt 24 der Kammer 10 auf der zweiten Seite 11b fungiert das wärmespeichernde Element 13 als wärmeaufnehmendes Element 13b. Somit nimmt dieses wärmespeichernde Element 13 beim Austritt des Luftstroms 25 aus der Kammer 10 gespeicherte Wärme aus dem Luftstrom 25 auf und kühlt damit den Luftstrom.

Danach strömt die Luft des Luftstroms 25 in einen Zwischenraum 15, in welchem ein Klimaregulierungselement 22 angebracht ist. Das Klimaregulierungselement 22 kann durch eine externe Regelung gesteuert werden und somit die Luft zwischen der ersten und zweiten Kammer nachjustieren, einstellen oder regulieren.

Zu Beginn der zweiten Kammer 10 strömt die Luft nun wieder durch die erste Seite 11a und ein wärmeabgebendes Element 13a durch den Lufteintritt 23 in die Kammer 10 und am Luftaustritt 24 durch das wärmeaufnehmende Element 13b der zweiten Seite 11b dieser Kammer 10 in den nächsten Zwischenraum 15.

Am Ende der ersten Ebene 14a wird der Luftstrom 25 im Randraum 16 in die zweite Ebene 14b geleitet und strömt dort in entgegengesetzter Richtung zurück, sodass er zuerst die zweite Seite 11b der Kammer 10 passiert, welche den Lufteintritt 23 dieser Kammer 10 darstellt mit dem wärmeabgebenden Element 13a. Nach dem Durchströmen der Kammer 10 verlässt der Luftstrom 25 die Kammer 10 durch den Luftaustritt 24 auf der ersten Seite 11a der Kammer 10 durch das wärmeaufnehmende Element 13b, um in den Zwischenraum 15 zu gelangen. Dieser Luftstrom 25 beziehungsweise Richtung des Luftstroms 25 wird im Betrieb der abgeschlossenen Klimazelle 100 für mehrere Sekunden, vorzugsweise 10s bis 3 min, besonders bevorzugt 60s bis 120s und ganz besonders bevorzugt 90s bis 100s aufrechterhalten.

Danach wird, wie in Figur 3b dargestellt, die Richtung des Luftstroms 25 umgekehrt, sodass nun nicht mehr das Lüftungssystem 21 des Randraumes der linken Seite der abgeschlossenen Klimazelle 100 die Luft antreibt, sondern das Lüftungssystem 21 am Randraum 16 der gegenüberliegenden Seite (hier rechts dargestellt). Dadurch strömt die Luft des Luftstroms 25 im Gegenuhrzeigersinn durch die erste und zweite Ebene 14a, 14b. Dabei passiert der Luftstrom 25 auf der ersten Ebene 14a zuerst die zweite Seite 11b einer Kammer 10, wobei sich am Lufteintritt 23 das wärmeabgebende Element 13a befindet. Nach Durchströmen der Kammer 10 tritt die Luft am Luftaustritt 24 durch das wärmeaufnehmende Element 13b auf der ersten Seite 11a der Kammer in den Zwischenraum 15 ein, in der ein Klimaregulierungselement 22 angebracht ist. Auf der zweiten Ebene 14b zirkuliert der Luftstrom 25 beim Eintritt in die Kammer 10 durch den Lufteintritt 23, also das wärmeabgebende Element 13a auf der ersten Seite 11a der Kammer 10. Nach Durchströmen der Kammer 10 tritt die Luft am Luftaustritt 24 durch das wärmeaufnehmende Element 13b auf der zweiten Seite 11b der Kammer 10 wieder aus. Das Klimaregulierungselement 22 sowie das Lüftungssystem 21 sind Teil des Klimasystems 20, welches jedoch auch noch weitere Elemente umfassen kann, beispielsweise Messgeräte, Sensoren und/oder weitere Regulierungseinheiten.

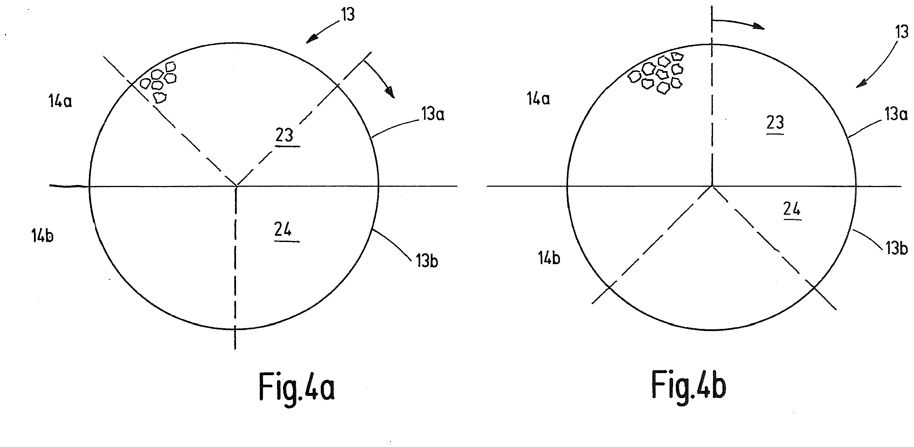

In Figur 4 wird schematisch dargestellt, wie eine Rotation des wärmespeichernden Elementes 13 anstelle der Änderung der Richtung des Luftstroms 25 für das Wechseln zwischen wärmeabgebendem Element 13a und wärmeaufnehmendem Element 13b verwendet werden kann. Das wärmespeichernde Element 13 befindet sich zum Teil auf Höhe der ersten Ebene 14a und zum anderen Teil auf Höhe der zweiten Ebene 14b, wobei das Element an der ersten Seite 11a beziehungsweise zweiten Seite 11b der Kammer 10 angeordnet ist. Dabei kann das wärmespeichernde Element 13 aus einem oder mehreren Teilen bestehen, welche auf gleicher Höhe, also direkt übereinander angeordnet sind, die jedoch auch versetzt voneinander angeordnet sein können. Eine Möglichkeit, die wärmespeichernden Elemente 13 zu tauschen, ist das Rotieren der wärmespeichernden Elemente 13 um einen gemeinsamen Mittelpunkt, wobei in Figur 4a die erste Ebene 14a den Lufteintritt 23 darstellt, in dem das wärmeabgebende Element 13a angeordnet ist und die zweite Ebene 14b den Luftaustritt 24 darstellt, in dem das wärmeaufnehmende Element 13b angeordnet ist. Hier wurde beispielhaft in Figur 4b das wärmespeichernde Element 13 um 60° gedreht, wodurch ein Teil des vormals wärmeabgebenden Elementes 13a der ersten Ebene 14a nun zu einem wärmeaufnehmenden Element 13b in der zweiten Ebene 14b geworden ist. Wie gehabt befindet sich der Lufteintritt 23 auf der ersten Ebene 14a und der Luftaustritt 24 auf der zweiten Ebene 14b.

### Bezugszeichen

- 100: Klimazelle
- 10: Kammer
- 11a: erste Seite
- 11b: zweite Seite
- 12: Lage
- 13: wärmespeicherndes Element
- 13a: wärmeabgebendes Element
- 13b: wärmeaufnehmendes Element
- 14a: erste Ebene
- 14b: zweite Ebene
- 15: Zwischenraum
- 16: Randraum

- 20: Klimasystem
- 21: Lüftungssystem
- 22: Klimaregulierungselement
- 23: Lufteintritt
- 24: Luftaustritt
- 25: Luftstrom

- 31: Durchlass
- 32: wärmeleitendes Material
- 33a: Vorderseite
- 33b: Rückseite

## Patentansprüche

1. Abgeschlossene Klimazelle (100) zur Pflanzenaufzucht in mehreren übereinander angeordneten Lagen (12), wobei die Klimazelle (100) mindestens eine Kammer (10) umfasst, in der die Lagen (12) übereinander angeordnet sind und sich von einer ersten Seite (11a) der Kammer (10) zu einer zweiten Seite (11b) der Kammer (10) erstrecken, wobei jede Lage (12) mindestens ein Pflanzenaufzuchtbehältnis und mindestens eine darüber angeordnete Beleuchtungsplattform aufweist, wobei mittels eines Klimasystems (20) der Klimazelle (100) ein Klima in der mindestens einen Kammer (10) eingestellt wird, **dadurch gekennzeichnet,**
**dass** auf der ersten (11a) und zweiten Seite (11b) der mindestens einen Kammer (10) jeweils ein wärmespeicherndes Element (13) angeordnet ist, wobei ein von einem Lüftungssystem (21) des Klimasystems (20) erzeugter Luftstrom (25) beide wärmespeichernde Elemente (13) durchströmt, wobei eine der beiden Seiten (11a, 11b) zumindest zu einem Zeitpunkt eine Lufteintrittsseite (23) und die verbleibende Seite eine Luftaustrittsseite (24) für den Luftstrom (25) bildet, wobei das auf der Lufteintrittsseite (23) angeordnete wärmespeichernde Element (13) als wärmeabgebendes Element (13a) fungiert und das auf der Luftaustrittsseite (24) angeordnete wärmespeichernde Element (13) als wärmeaufnehmendes Element (13a) fungiert.

2. Abgeschlossene Klimazelle (100) gemäß Anspruch 1,
**gekennzeichnet dadurch,**
**dass** die mindestens eine Kammer (10) der Klimazelle (100) aus mindestens einer ersten und mindestens einer zweiten Ebene (14a, 14b) besteht und der Luftstrom (25) in der ersten Ebene (14a) und der zweiten Ebene (14b) in jeweils entgegengesetzter Richtung ausgerichtet ist.

3. Abgeschlossene Klimazelle (100) gemäß Anspruch 1 oder 2,
**gekennzeichnet dadurch,**
**dass** eine Richtung des Luftstroms (25) durch die mindestens eine Kammer (10) änderbar und/oder wechselbar ist.

4. Abgeschlossene Klimazelle (100) gemäß Anspruch 3,
**gekennzeichnet dadurch,**
**dass** die Klimazelle (100) ein Lüftungssystem (21) aufweist, durch welchen die Richtung des Luftstroms (25) änderbar und/oder wechselbar ist.

5. Abgeschlossene Klimazelle (100) gemäß einem der vorhergehenden Ansprüche,
**gekennzeichnet dadurch,**
**dass** die wärmespeichernden Elemente (13) starr an der ersten (11a) beziehungsweise zweiten Seite (11b) der Kammer (10) angeordnet sind.

6. Abgeschlossene Klimazelle (100) gemäß einem der Ansprüche 3 bis 5,
**gekennzeichnet dadurch,**
**dass** nach einem Richtungswechsel des Luftstroms (25) die Funktion der beiden wärmespeichernden Elemente (13) getauscht wird, derart, dass das vorher als wärmeabgebend fungierende Element (13a) als wärmeaufnehmendes Element (13b) fungiert, und das vorher als wärmeaufnehmend fungierende Element (13b) als wärmeabgebendes Element (13a) fungiert.

7. Abgeschlossene Klimazelle (100) gemäß Anspruch 2,
**gekennzeichnet dadurch,**
**dass** das zu einem Zeitpunkt als wärmeabgebend fungierende Element (13b) der ersten Ebene (14a) der mindestens einen Kammer (10) bewegbar mit dem zu diesem Zeitpunkt als wärmeaufnehmend fungierenden Element (13a) der zweiten Ebene (14b) der mindestens einen Kammer (10) verbunden ist.

8. Abgeschlossene Klimazelle (100) gemäß Anspruch 7,
**gekennzeichnet dadurch,**
**dass** bei der Bewegung der wärmespeichernden Elemente (13) zweier Ebenen (14a, 14b) das als wärmeaufnehmend fungierende Element (13b) der einen Ebene (14a, 14b) zu einem als wärmeabgebend fungierenden Element (13a) der anderen Ebene (14a, 14b) gewechselt wird und das als wärmeabgebend fungierende Element (13a) der einen Ebene (14a, 14b) zu einem als wärmeaufnehmend fungierenden Element (13b) der anderen Ebene (14a, 14b) gewechselt wird.

9. Abgeschlossene Klimazelle (100) gemäß einem der Ansprüche 7 und 8,
**gekennzeichnet dadurch,**
**dass** die beiden verbundenen, wärmespeichernden Elemente (13) zwei Teile eines Rotors bilden.

10. Abgeschlossene Klimazelle (100) gemäß einem der Ansprüche 7 bis 9,
**gekennzeichnet dadurch,**
**dass** die Bewegung der beiden verbundenen, wärmespeichernden Elemente (13) kontinuierlich stattfindet.

11. Abgeschlossene Klimazelle (100) gemäß einem der Ansprüche 7 bis 9,
**gekennzeichnet dadurch,**
**dass** die Bewegung der beiden verbundenen, wärmespeichernden Elemente (13) in diskreten Schritten stattfindet.

12. Abgeschlossene Klimazelle (100) gemäß einem der vorherigen Ansprüche,
**gekennzeichnet dadurch,**
**dass** die Klimazelle (100) mehrere Kammern (10) umfasst, welche bevorzugt nebeneinander angeordnet sind, sodass der Luftstrom (25) die Kammern (10) hintereinander durchströmt.

13. Abgeschlossene Klimazelle (100) gemäß einem der vorherigen Ansprüche,
**gekennzeichnet dadurch,**
**dass** in einem Zwischenraum (15) zwischen zwei benachbarten Kammern (10) und/oder in einem Randraum (16) auf einer Seite (11a, 11b) einer einzelnen Kammer (10) ein Klimaregulierungselement (22) angebracht ist.

14. Abgeschlossene Klimazelle (100) gemäß einem der vorherigen Ansprüche,
**gekennzeichnet dadurch,**
**dass** das wärmespeichernde Element (13) wärmeleitendes Material (32), insbesondere Metall, bevorzugterweise Aluminium, aufweist oder daraus besteht.

15. Abgeschlossene Klimazelle (100) gemäß einem der vorherigen Ansprüche,
**gekennzeichnet dadurch,**
**dass** das wärmespeichernde Element (13) mehrere länglich ausgebildete Durchlässe (31) aufweist und bevorzugterweise eine Wabenstruktur aufweist oder daraus besteht.

## Claims

1. Closed climate cell (100) for plant cultivation in multiple layers (12) arranged one above the other, wherein the climate cell (100) comprises at least one chamber (10) in which the layers (12) are arranged one above the other and extend from a first side (11a) of the chamber (10) to a second side (11b) of the chamber (10), wherein each layer (12) has at least one plant-cultivation container and at least one lighting platform arranged thereabove, wherein a climate is set in the at least one chamber (10) by means of a climate system (20) of the climate cell (100),
**characterized**
**in that** in each case one heat-storing element (13) is arranged on the first side (11a) and second side (11b) of the at least one chamber (10), wherein an air flow (25) generated by a ventilation system (21) of the climate system (20) flows through both heat-storing elements (13), wherein, at least at a point in time, one of the two sides (11a, 11b), forms an air-inlet side (23) and the remaining side forms an air-outlet side (24) for the air flow (25), wherein the heat-storing element (13) arranged on the air-inlet side (23) functions as a heat-emitting element (13a) and the heat-storing element (13) arranged on the air-outlet side (24) functions as a heat-absorbing element (13a).

2. Closed climate cell (100) according to Claim 1,
**characterized**
**in that** the at least one chamber (10) of the climate cell (100) consists of at least one first and at least one second level (14a, 14b), and the air flow (25) at the first level (14a) and at the second level (14b) are oriented in in each case opposite directions.

3. Closed climate cell (100) according to Claim 1 or 2,
**characterized**
**in that** a direction of the airflow (25) through the at least one chamber (10) is able to be changed and/or switched.

4. Closed climate cell (100) according to Claim 3,
**characterized**
**in that** the climate cell (100) has a ventilation system (21) by way of which the direction of the air flow (25) is able to be changed and/or switched.

5. Closed climate cell (100) according to one of the preceding claims,
**characterized**
**in that** the heat-storing elements (13) are arranged rigidly on the first side (11a) and the second side (11b) of the chamber (10).

6. Closed climate cell (100) according to one of Claims 3 to 5,
**characterized**
**in that**, after a change of direction of the air flow (25), the functions of the two heat-storing elements (13) are swapped around in such a way that the element (13a) previously with the heat-emitting function functions as a heat-absorbing element (13b) and the element (13b) previously with the heat-absorbing function functions as a heat-emitting element (13a).

7. Closed climate cell (100) according to Claim 2,
**characterized**
**in that** that element (13b) of the first level (14a) of the at least one chamber (10) with the heat-emitting function at a point in time is connected in a movable manner to that element (13a) of the second level (14b) of the at least one chamber (10) with the heat-absorbing function at this point in time.

8. Closed climate cell (100) according to Claim 7,
**characterized**
**in that**, during the movement of the heat-storing elements (13) of two levels (14a, 14b), that element (13b) of one level (14a, 14b) with the heat-absorbing function is switched to an element (13a) of the other level (14a, 14b) with the heat-emitting function, and that element (13a) of one level (14a, 14b) with the heat-emitting function is switched to an element (13b) of the other level (14a, 14b) with the heat-absorbing function.

9. Closed climate cell (100) according to either of Claims 7 and 8,
**characterized**
**in that** the two connected heat-storing elements (13) form two parts of a rotor.

10. Closed climate cell (100) according to one of Claims 7 to 9,
**characterized**
**in that** the movement of the two connected heat-storing elements (13) takes place in a continuous manner.

11. Closed climate cell (100) according to one of Claims 7 to 9,
**characterized**
**in that** the movement of the two connected heat-storing elements (13) takes place in discrete steps.

12. Closed climate cell (100) according to one of the preceding claims,
**characterized**
**in that** the climate cell (100) comprises multiple chambers (10), which are preferably arranged one next to the other such that the air flow (25) flows through the chambers (10) one after the other.

13. Closed climate cell (100) according to one of the preceding claims,
**characterized**
**in that** a climate-regulation element (22) is provided in an intermediate space (15) between two adjacent chambers (10) and/or in an edge space (16) on one side (11a, 11b) of a single chamber (10).

14. Closed climate cell (100) according to one of the preceding claims,
**characterized**
**in that** the heat-storing element (13) comprises heat-conducting material (32), in particular metal, preferably aluminium, or consists thereof.

15. Closed climate cell (100) according to one of the preceding claims,
**characterized**
**in that** the heat-storing element (13) has multiple elongate passages (31) and preferably has a honeycomb structure or consists thereof.

## Revendications

1. Cellule climatique fermée (100) servant à la culture de plantes en plusieurs couches (12) disposées les unes au-dessus des autres, la cellule climatique (100) comprenant au moins une chambre (10) dans laquelle les couches (12) sont disposées les unes au-dessus des autres et s'étendent d'un premier côté (11a) de la chambre (10) à un deuxième côté (11b) de la chambre (10), chaque couche (12) présentant au moins un récipient de culture de plantes et au moins une plate-forme d'éclairage disposée au-dessus de celui-ci, un climat étant réglé dans l'au moins une chambre (10) au moyen d'un système climatique (20) de la cellule climatique (100),
**caractérisée en ce que**
respectivement un élément (13) stockant de la chaleur est disposé sur le premier (11a) et le deuxième côté (11b) de l'au moins une chambre (10), un flux d'air (25) généré par un système de ventilation (21) du système climatique (20) traversant les deux éléments (13) stockant de la chaleur, l'un des deux côtés (11a, 11b) formant, au moins à un instant, un côté d'entrée d'air (23) et le côté restant formant un côté de sortie d'air (24) pour le flux d'air (25), l'élément (13) stockant de la chaleur disposé sur le côté d'entrée d'air (23) fonctionnant comme élément (13a) émettant de la chaleur et l'élément (13) stockant de la chaleur disposé sur le côté de sortie d'air (24) fonctionnant comme élément (13a) absorbant de la chaleur.

2. Cellule climatique fermée (100) selon la revendication 1,
**caractérisée en ce que**
l'au moins une chambre (10) de la cellule climatique (100) est constituée d'au moins un premier et d'au moins un deuxième plan (14a, 14b) et le flux d'air (25) dans le premier plan (14a) et le deuxième plan (14b) est orienté respectivement dans une direction opposée.

3. Cellule climatique fermée (100) selon la revendication 1 ou 2,
**caractérisée en ce**
**qu'**une direction du flux d'air (25) à travers l'au moins une chambre (10) peut être modifiée et/ou interchangée.

4. Cellule climatique fermée (100) selon la revendication 3,
**caractérisée en ce que**
la cellule climatique (100) présente un système de ventilation (21) au moyen duquel la direction du flux d'air (25) peut être modifiée et/ou interchangée.

5. Cellule climatique fermée (100) selon l'une des revendications précédentes,
**caractérisée en ce que**
les éléments (13) stockant de la chaleur sont disposés rigidement sur le premier (11a) ou le deuxième côté (11b) de la chambre (10), respectivement.

6. Cellule climatique fermée (100) selon l'une des revendications 3 à 5,
**caractérisée en ce**
**qu'**après un changement de direction du flux d'air (25), le fonctionnement des deux éléments (13) stockant de la chaleur est commuté de telle sorte que l'élément (13a) qui fonctionnait précédemment de manière à émettre de la chaleur fonctionne comme élément (13b) absorbant de la chaleur, et l'élément (13b) qui fonctionnait précédemment de manière à absorber de la chaleur fonctionne comme élément (13a) émettant de la chaleur.

7. Cellule climatique fermée (100) selon la revendication 2,
**caractérisée en ce que**
l'élément (13b) du premier plan (14a) de l'au moins une chambre (10) qui fonctionnait à un instant de manière à émettre de la chaleur est relié de manière mobile à l'élément (13a) du deuxième plan (14b) de l'au moins une chambre (10) qui fonctionnait à cet instant de manière à absorber de la chaleur.

8. Cellule climatique fermée (100) selon la revendication 7,
**caractérisée en ce que**,
lors du mouvement des éléments (13) stockant de la chaleur de deux plans (14a, 14b), l'élément (13b), fonctionnant de manière à absorber de la chaleur, de l'un des plans (14a, 14b) est commuté à un élément (13a), fonctionnant de manière à émettre de la chaleur, de l'autre plan (14a, 14b) et l'élément (13a), fonctionnant de manière à émettre de la chaleur, de l'un des plans (14a, 14b) est commutée à un élément (13b), fonctionnant de manière à absorber de la chaleur, de l'autre plan (14a, 14b).

9. Cellule climatique fermée (100) selon l'une des revendications 7 et 8,
**caractérisée en ce que**
les deux éléments (13) reliés, stockant de la chaleur forment deux parties d'un rotor.

10. Cellule climatique fermée (100) selon l'une des revendications 7 à 9,
**caractérisée en ce que**
le mouvement des deux éléments (13) reliés, stockant de la chaleur a lieu en continu.

11. Cellule climatique fermée (100) selon l'une des revendications 7 à 9,
**caractérisée en ce que**
le mouvement des deux éléments (13) reliés, stockant de la chaleur a lieu par étapes discrètes.

12. Cellule climatique fermée (100) selon l'une des revendications précédentes,
**caractérisée en ce que**
la cellule climatique (100) comprend plusieurs chambres (10), lesquelles sont de préférence disposées les unes à côté des autres, de sorte que le flux d'air (25) traverse les chambres (10) les unes après les autres.

13. Cellule climatique fermée (100) selon l'une des revendications précédentes,
**caractérisée en ce**
**qu'**un élément de régulation climatique (22) est installé dans un espace intermédiaire (15) entre deux chambres adjacentes (10) et/ou dans un espace de bord (16) sur un côté (11a, 11b) d'une chambre individuelle (10).

14. Cellule climatique fermée (100) selon l'une des revendications précédentes,
**caractérisée en ce que**
l'élément (13) stockant de la chaleur présente une matière (32) thermoconductrice, en particulier un métal, de préférence de l'aluminium, ou est constitué de celle-ci.

15. Cellule climatique fermée (100) selon l'une des revendications précédentes,
**caractérisée en ce que**
l'élément (13) stockant de la chaleur présente plusieurs passages (31) de forme allongée et présente de préférence une structure alvéolaire ou est constitué de celle-ci.
